(19) Europäisches Patentamt
European Patent Office
Office européen des brevets

(11) **EP 2 858 256 A1**

(12) **EUROPEAN PATENT APPLICATION**

(43) Date of publication:
**08.04.2015 Bulletin 2015/15**

(51) Int Cl.:
***H04B 3/54*** (2006.01)

(21) Application number: **14187364.6**

(22) Date of filing: **01.10.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.10.2013 PT 2013107203**

(71) Applicant: **Arquiled - Projectos de Iluminacao S.A.
7490-328 Mora (PT)**

(72) Inventors:
• **Leitão Gomes Pinho Valverde, Pedro
1800-033 Lisboa (PT)**
• **Nunes Coelho, José Luís
8600-574 Lagos (PT)**

(74) Representative: **Ferreira, Maria Silvina
Clarke, Modet & Co.
Rua Castilho, 50-9°
1269-163 Lisboa (PT)**

(54) **Method for encoding a data signal on alternating current**

(57)    The present application describes a method for encoding a data signal on alternating current that allows communicating in the controller's direction to the device, without the need for additional infrastructure beyond the electrical network of supply.

With the disclosed technical solution, it is intended to convert the electrical supply in a hybrid system of energy supply and unidirectional data communication, without signals being used or injected at different frequencies than the one used in the source, using as an encoded transmission method the suppression 1 in each N half-wave cycles.

EP 2 858 256 A1

## Description

### Technical domain

The present application describes a method for encoding a data signal on alternating current that allows communicating in the controller's direction to the device without requiring additional infrastructure beyond the electrical network of supply.

### Background

Document EP0038877A1 discloses a method of transmitting information and instructions through a transmission line of alternating current. Said network is composed by at least one control station, interconnected with the remaining network, with the objective of interrupting at least a part of some half-waves of alternating current transmitted to one or more dependent stations, equipped with receivers which in turn are associated with apparatus of electrical consumption. However, in the present application a method for encoding a data signal on alternating current is disclosed, wherein the signal data is digital.

### Summary

It is described a method for encoding a data signal on an alternating current comprising the suppression of half-wave cycle of a set of N consecutive half-wave cycles, for transmitting a data signal value, this value being obtained by counting the half-wave cycles occurred since the beginning of said N half-wave cycles until the occurrence of said suppressed half-wave cycle.

It is also described a method wherein the data signal is digital and each word of n bits of the data signal is encoded into $2^n$ half-wave cycles, wherein the suppression of only one of these half-wave cycles corresponds to a value of said word.

It is also described a method wherein the data signal is decimal and every decimal word of the data signal is encoded into 10 half-wave cycles, wherein the suppression of only one of these half-wave cycles corresponds to a value of the referred decimal digit.

It is also described a method wherein a word of the data signal is encoded in said N half-wave cycles and is followed by T non-suppressed half-wave cycles, wherein the ratio $1/(N+T)$ is the maximum desired power reduction.

It is also described a method wherein if in said N half-wave cycles any non-suppressed half-wave cycle not occurs, then this represents the end of transmission of the data signal to codify.

It is also described a method wherein the N consecutive half-wave cycles include both the positive half-wave cycle and the negative half-wave cycle.

It is also described a method wherein the N consecutive half-wave cycles only include the consecutive positives half-wave cycle.

It is also described a method of command of a load device from a command device by one of the data signal encoding methods mentioned above.

It is further described a control device for implementing the above control method.

It is further described a load device to implement the above command method.

### General Description

The controller was developed to work with a 230V AC electric grid at 50Hz, although other voltages and frequencies are possible if in alternating current, and to be installed upstream of the equipment to be controlled here designated by commanded devices.

Since the electrical circuits will be used with command over the devices placed on them it is imposed that these commands are prepared to operate under the management of the controllers, i.e., only compatible commands with the present system may share the same power circuit with a controller.

Main features of a system from a functional point of view:

- Control of devices developed or adapted for the purpose;
- Unidirectional communication of the controller to the controlled devices;
- General command or by groupings of devices in manual or scheduled mode through the setting of scheduling profiles;
- Control of circuits up to 2500W by each controller in supply networks of 230V with 50Hz;
- Contains 1 analog and 4 digital inputs for connection to a crepuscular cell, 1-10V systems, astronomical clock command or other compatible automatism;

- Communications port based in RS232 for access through the command console or connection to a concentrating gateway;
- Need to install protective equipment (bipolar circuit breaker up to 16A for 230V AC) upstream the controller;
- Control system includes power supply unit 230V AC, 12V DC and contactor installed outside the controller unit;
- Compatible with other management systems and bidirectional networks;
- Remote configuration of the controlled devices;
- There is no distance limit for the wiring between the control equipment and the controlled device(s) the same equivalent requirements being required to the ones that ensure the correct setting up of the electrical equipment. The most particular aspect is respect by the copper sections used for the respective power of the equipment(s);
- The integration of a unidirectional system with a bidirectional has limitations because the first does not have feedback, inhibiting some Management functions.

In a preferred embodiment, the device may further include control peripherals such as: crepuscular cells, 1-10V command, infrared barriers, contact switches for alarm triggering or other compatible devices.

In a preferred embodiment, the system can operate in two distinct ways using the functionality of the available terminal by the serial communication port:

- Management mode with Gateway and control through the console in own protocol developed by the applicant of the present application;
- Text mode through console commands by RS232 terminal. Connecting a PC to the communications port also allows to configure the available controller parameters:
- Enable/disable functionalities;
- Define operating profiles;
- Configure the 1-10V input ports and digital inputs;
- Manually control the controlled devices or configure them remotely;
- Communicate according to the developed protocol in the controller's direction to the device and have all the functionality of an equivalent PLC system with the restriction of having no information feedback coming from the commanded device.

In a preferred embodiment, the command/control equipment has as requirement to be installed upstream of the controlled devices connected to a same electrical circuit. Each controller can only control one electrical circuit and cannot contain any other controller upstream.

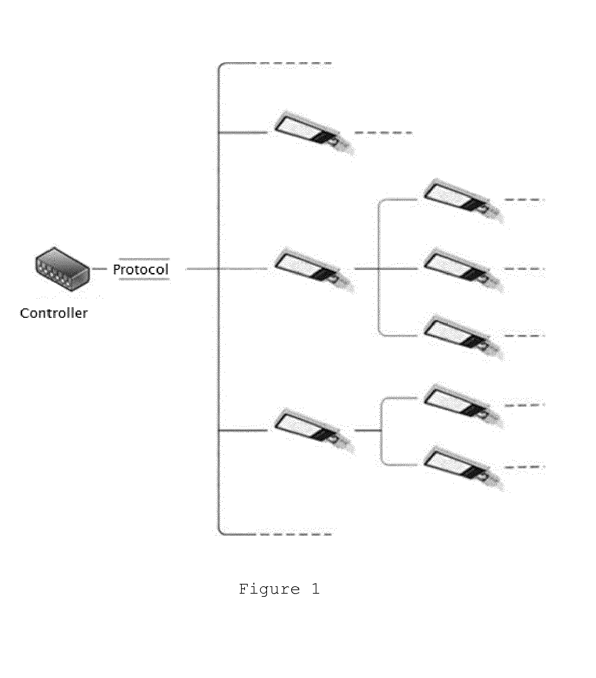

In a preferred embodiment, a typical installation of a circuit has the appearance shown in Figure 1.

In a preferred embodiment, as each controller controls a recommended power of 2500W the power sum of all equipment downstream the controller should be accounted so that the indicated value is not exceeded.

In a preferred embodiment, each controller must further be protected upstream with a recommended 10A bipolar circuit breaker up to a limit of 16A (breaker is not included).

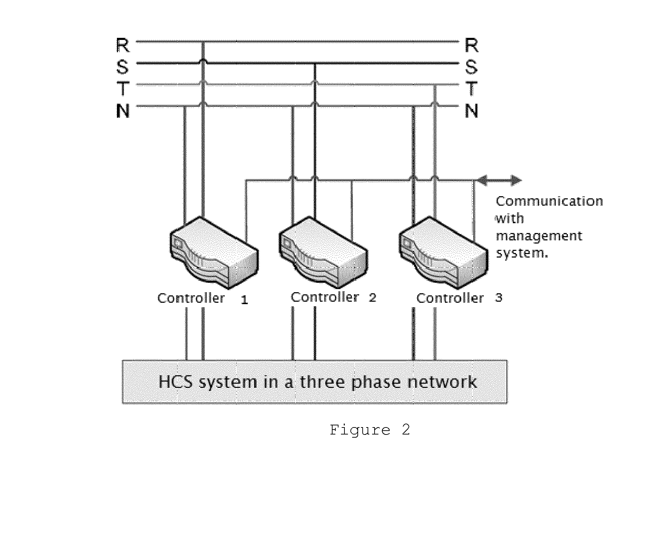

In a preferred embodiment, in terms of flexibility, the adaptation to three-phase supply presupposes that three controllers a replaced, that is, one for each phase. Being the commanded devices monophasic, the implementation of the solution will look like this: see in figure 2 an installation example.

**Brief Description of the Figures**

For an easier understanding of the technology, below are described examples of embodiments of the technology, which, however, do not intend to limit the subject of the present application.

In Figure 1, a typical installation diagram of a system is illustrated.

In Figure 2, an example of a system installation is illustrated.

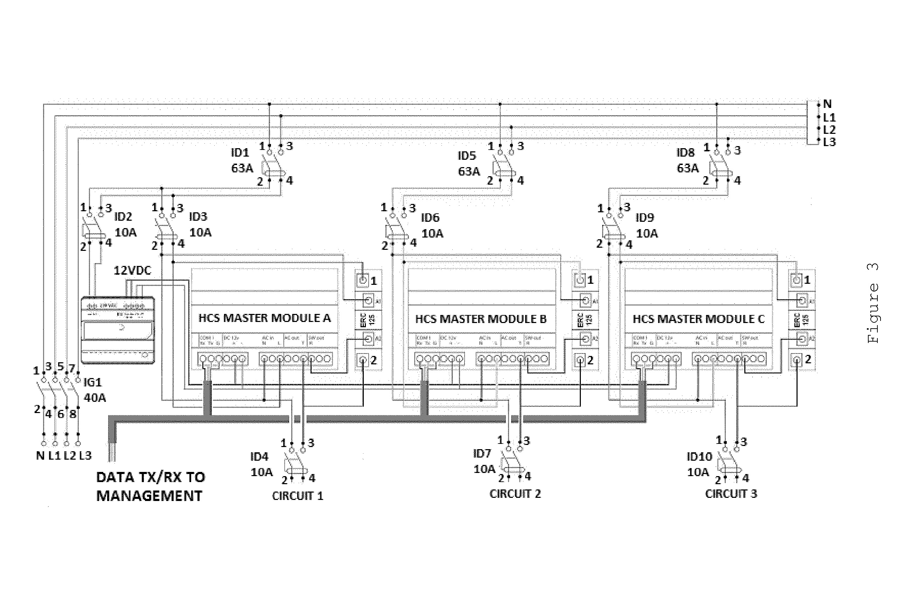

In Figure 3, a circuit diagram of a typical installation with a common 12V DC external feeder unit of for the three controllers and respective contactor is illustrated.

In Figure 4, a simple distribution system with a single command is represented.

In Figure 5, the encoding of the sinusoidal wave in the command system with N = 4 and T = 1 is represented.

In Figure 6, the decoding of the received wave in the receiving loads is represented.

In Figure 7, the encoding of the sinusoidal wave in the command system with N = 10 and T = 0 is represented.

In Figure 8, the decoding of the received wave in the receiving loads is represented.

**Description of embodiments**

Currently it is increasingly important that electrical equipment have the ability to be centrally commanded. These devices are typically connected to fixed electrical installations forming a network as a whole whereby the energy is distributed.

There are usually two different types of distinct equipment that are connected to the power distribution network:

- Protection and control equipment (switches, circuit breakers...);
- Receiver equipment (home appliances, lamps...).

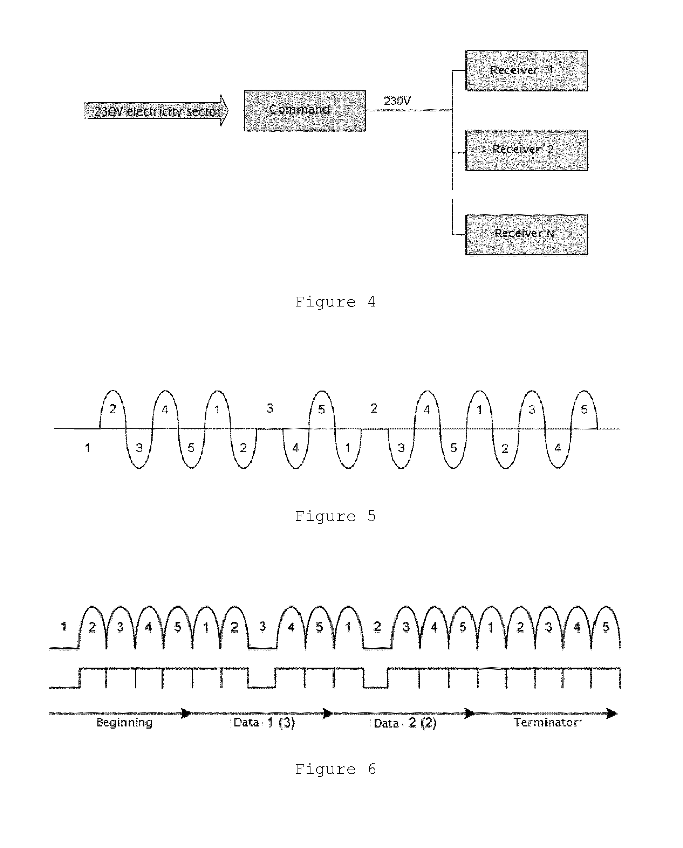

For domestic or public lighting systems, because they are being used only in circumstances where the use of artificial light is needed, the receiver equipment are subject to a control imposed by the fact that these depend on the energy supplied to them. Through energy cutting systems in specific sectors or shunts, these systems imply the existence of previous installations with fixed operation modes (a certain switch always commands the same electrical shunt i.e. the same lamp, e.g.). The proposed system aims to adapt in a simple and consistent way, lighting circuits with multiple receivers through a single command element: Figure 4 shows a simple distribution system with a single command.

The present invention therefore relates to a method for encoding a data signal on alternating current that allows communicating in the controller's direction to the device without requiring additional infrastructure beyond the electric grid supply.

Through the electrical supply in alternating current, a variation in the sinusoidal wave is encoded, maintaining the energy delivered to the receiver by adding data communication by a set of codes, by suppression of half-wave cycles.

The encoded signals are interpreted and executed by the receiver that consists of an interpreter/controller additional module capable of performing the required tasks.

Taking a lamp as an example, this will have a module that can be incorporated into its E27 base for example, and will be able to decode the signal sequences transmitted in the form of wave of the electrical supply and interpreting a command.

The control system placed upstream in the electrical circuit encodes the sinusoidal wave alternating electrical network whenever is intended to transmit an order to the downstream equipment. The encoding of the data is based on the removal of half-wave cycles by serializing binary information.

The load (receiver) is in turn an element adapted to sudden power interruptions as it is commonly used in conventional lighting systems when being commanded by switches or contactors.

The present invention aims to convert the electrical supply in a hybrid system of energy supply and unidirectional data communication, without signals being used or injected at different frequencies than the ones applied in the source, using as an encoded transmission method the suppression 1 in each N half-wave cycles.

The frequency of the sinusoidal carrier signal generates 100 or 120 half-wave cycles depending on the grid (50 Hz or 60 Hz respectively).

In the case of public lighting with LED or other wherein flow regulation is made in the driver/regulator itself of the lamp itself, said driver/regulator may incorporate an external or internal module, capable of decoding suppressions of half cycles and to be able with this system to transmit commands capable of indicating the target flow value, without passing additional cables safely (without sharing of physical environment with other users) and practically independent of the cable distance traveled provided that the line breaks allow feeding the luminaires.

While controlling heating systems a decoder module of half cycle's suppressions can be interleaved and thus switch the required number of resistances or even shut down all the resistances by centrally controlling the heating power.

In digital data transmissions that are compatible with low-flow data command network, this system may be associated in a general way, for example in switched sources or other type of primary feeding devices, so that the suppressions are not felt on the load and at the same time the receiving device can receive commands or instructions of significance in terms of control, in the context of the equipment itself.

Regarding encoding, the suppression system of a half-wave cycle in each N may be used to encode the transmission of a numerical value of variable basis. If N is for example 10 this means that one-half can be withdrawn at every 10 wherein the position of the suppressed cycle represents a number from 0 to 9 or total set of 10 commands.

The transmission start and stop signals are made by a suppression of one initial half cycle for synchronization of the weft and the absence of any suppression during N half cycles for indicating end of transmission.

It is also considered a number of cycles T that represent the inhibition cutting interval of each half cycle in the intermediate of each transmitted value. The T function, that in particular may have the value from 0 (none) to N - 1, is to ensure a spacing between transmitted values allowing to adjust the power breakdown caused by the suppression of an half cycle on the transmission line without the encoded values being altered and to ensure that two consecutive half cycles are not suppressed. It further has the advantage of facilitating data synchronization when having a constant behavior regardless the data to be transmitted.

In the following demonstrations, applications of this technology will be exemplified with two different encodings for transmission of numerical values with words of 4 values and one half cycle for power replacement (N = 4 and T = 1) and other application with words of 10 values without replacement half cycles (N = 10 and T = 0).

In a preferred embodiment, for 4 commands per word, with N = 4 and T = 1, we will have a supply reduction of maximum power during transmission around:

$$\frac{1}{N+T} \equiv \frac{1}{5} = 20\%$$

With this practical case a coding example by application of the present invention it will be demonstrated illustrating how it can be used to transmit synchronous commands.

With the network frequency kept constant, synchronization of data in time is obtained. The fifth half cycle is the half cycle T that when is greater than zero constitutes an "overhead" but which in turn can increase the average power provided without altering the basis of the encoded word in terms of numerical value. That is, comparatively, if we had T = 0, we would have a reduction of energy supply during transmission around:

$$\frac{1}{N} = \frac{1}{4} = 25\%$$

Which means that with T = 1, 5% is won in terms of the average power supplied during transmission.

In the following, an example of an encoded transmission in command is presented: see Figure 5 - Coding of the sinusoidal wave in the command system with N = 4 and T = 1.

In loads or receivers, after full-wave rectification the following signal arrives: see Figure 6 - Decoding the received wave in the receiving loads.

Taking for example the following table one can decode this signal:

Table 1 - Encoding example of the suppression of half cycles of sinusoidal wave on a basis of 4 commands per word.

| ENCODING | | | | | VALUE |
|---|---|---|---|---|---|
| **N** | | | | **T** | |
| SUP | OK | OK | OK | OK | 0 |
| OK | SUP | OK | OK | OK | 1 |
| OK | OK | SUP | OK | OK | 2 |
| OK | OK | OK | SUP | OK | 3 |
| OK | OK | OK | OK | OK | TERMINATOR |
| OK - normal half cycle, SUP - suppressed halt cycle | | | | | |

Meaning that the following composite value on a basis 4 composed by 2 words was transmitted:

21

That in decimal basis is equivalent to:

9

Knowing that 20 half-wave cycles were used (including initialization and terminator) one can conclude that the same transmitted in a network at 50Hz will take:

$$\frac{1}{2 \cdot 50} \cdot 20 = 0,20 \; sec$$

In a preferred embodiment, for a case of 10 commands per word, N = 10 and T = 0, there will be a supply reduction of maximum power during transmission around:

$$\frac{1}{N + T} \equiv \frac{1}{10} = 10\%$$

In this case we have no overhead because the 10% reduction does not justify the additional bit consumption and the exchange ratio in terms of speed vs. power reduction has a factor of 1 to 10 which is penalizing for T > 0 values but one must bear in mind that depending on the data transmitted we can have the suppression of two consecutive half cycles which converts itself in the suppression of a complete cycle although with the guarantee of nine half cycles present on the left and right in time.

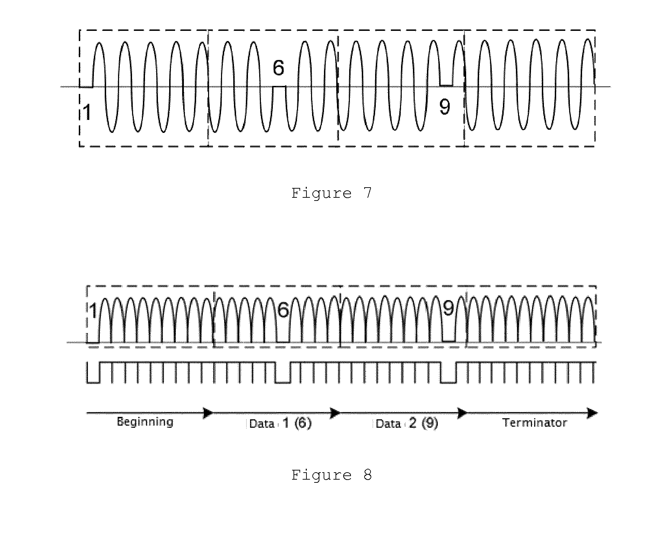

In the following there an example of an encoded transmission in command is presented: see Figure 7 - Encoding of the sinusoidal wave in the command system with N = 10 and T = 0.

In the loads or receivers, after the full-wave rectification the following signal arrives: see Figure 8 - Decoding the received wave in the receiving loads.

Taking for example the following table one can decode this signal:

Table 2 - Example of encoding the suppression of sinusoidal wave half cycles on a basis of 10 commands per word.

| ENCODING | | | | | | | | | | DESCRIPTION |
|---|---|---|---|---|---|---|---|---|---|---|
| N | | | | | | | | | | |
| SUP | OK | OK | OK | OK | OK | OK | OK | OK | OK | 0 |
| OK | SUP | OK | OK | OK | OK | OK | OK | OK | OK | 1 |
| OK | OK | SUP | OK | OK | OK | OK | OK | OK | OK | 2 |
| OK | OK | OK | SUP | OK | OK | OK | OK | OK | OK | 3 |
| OK | OK | OK | OK | SUP | OK | OK | OK | OK | OK | 4 |
| OK | OK | OK | OK | OK | SUP | OK | OK | OK | OK | 5 |
| OK | OK | OK | OK | OK | OK | SUP | OK | OK | OK | 6 |
| OK | OK | OK | OK | OK | OK | OK | SUP | OK | OK | 7 |
| OK | OK | OK | OK | OK | OK | OK | OK | SUP | OK | 8 |
| OK | OK | OK | OK | OK | OK | OK | OK | OK | SUP | 9 |
| OK | OK | OK | OK | OK | OK | OK | OK | OK | OK | TERMINATOR |
| OK - normal half cycle, SUP - suppressed half cycle | | | | | | | | | | |

Meaning that the following composite value in a basis of 10 composed by 2 words was transmitted:

58

Knowing that 20 half-wave cycles were used (counting with initialization and terminator) one can conclude that when transmitted on a network at 50Hz it will take:

$$\frac{1}{2 \cdot 50} \cdot 40 = 0,40 \; sec$$

Regarding the equipment constitution, the required physical elements to implement a system with "half cycle suppression" technology are an encoder module or command module and one or more decoders modules or load modules.

The construction of both the encoder equipment and the load equipment is inexpensive and with very simple electronics.

Regarding the control module, the electronic circuits capable of performing these operations are simple and inexpensive where we can indicate by way of example the use of a TRIAC.

Regarding the load module, through an opto-coupler of AC input directly connected to the network by, for example, two 100K series resistance one can obtain the square wave shown in Figure 2.

The presented system has advantages by allowing controlling electrical devices simply and inexpensively by suppressing half-cycles, ensuring minimum power supply. It is known that in lighting even small voltage drops can cause visible changes to users, so it is essential to ensure that the power failure, in loads controlled by suppressing half-cycles, is guaranteed to be below a predetermined level. In addition, certain types of devices (e.g. certain lamps) tolerate well the suppression of half-wave cycle since they occur with an inferior frequency than a preset limit, being so equally advantageous the methods described.

The present embodiment is not, naturally, in no way restricted to the embodiments described herein and a person with ordinary skills in the area may provide many possibilities for changes without departing from the general idea, as defined in the claims.

The preferred embodiments described above are obviously combined with each other. The following claims additionally define preferred embodiments.

## Claims

1. Method for encoding a data signal on alternating current which comprises suppressing a half-wave cycle of a set of N consecutive half-wave cycles, for transmitting a digital data signal value, that value being obtained by counting the half-wave cycles occurred since the beginning of said N half-wave cycles until the occurrence of said suppressed half-wave cycle.

2. Method according to the previous claim wherein each word of n bits of the data signal is encoded into $2^n$ half-wave cycles, wherein the suppression of only one of these half-wave cycles corresponds to a value of said word.

3. Method according to claim 1 wherein the data signal is decimal and every decimal word of the data signal is encoded into 10 half-wave cycles, wherein the suppression of only one of these half-wave cycles corresponds to a value of said decimal digit.

4. Method according to any one of the previous claims wherein a word of the data signal is encoded in said N half-wave cycles and is followed by T non-suppressed half-wave cycles, wherein the ratio $1/(N+T)$ is the maximum desired power reduction.

5. A method according to any of the previous claims wherein if in said N half-wave cycles any non-suppressed half-wave cycle does not occur, then this represents the end of the transmission of the data signal to codify.

6. Method according to the previous claims wherein the N consecutive half-wave cycles include both positive half-wave cycle and the negative half-wave cycle.

7. Method according to any one of the claims 1-5 wherein the N consecutive half-wave cycles only include the consecutive positives half-wave cycles.

8. Command method according to any one of the claims 1-7 of a load device from a command device.

9. Command device for implementing the command method described in any one of the claims 1 to 8.

10. Loading device for implementing the command method described in any of the claims 1 to 8.

Figure 1

Figure 2

Figure 3

Figure 4

Figure 5

Figure 6

Figure 7

Beginning → Data 1 (6) → Data 2 (9) → Terminator

Figure 8

**EP 2 858 256 A1**

Europäisches
Patentamt

European
Patent Office

Office européen
des brevets

# EUROPEAN SEARCH REPORT

Application Number

EP 14 18 7364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/69160 A1 (LAMES ELIAHU [IL]; ROTEM BARAK [IL]) 16 November 2000 (2000-11-16) * page 10, line 27 - page 12, line 16; figures 6b,6c * | 1-10 | INV. H04B3/54 |
| X | DE 20 2012 004412 U1 (HIDDE AXEL R [DE]; WALTER BERNHARD [DE]) 14 June 2012 (2012-06-14) * paragraphs [0055] - [0058]; figure 2b * | 1,5 | |

| | | | TECHNICAL FIELDS SEARCHED (IPC) |
|---|---|---|---|
| | | | H04B |

The present search report has been drawn up for all claims

| Place of search | Date of completion of the search | Examiner |
|---|---|---|
| The Hague | 26 January 2015 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 14 18 7364

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2015

| Patent document cited in search report | Publication date | Patent family member(s) | | Publication date |
|---|---|---|---|---|
| WO 0069160 A1 | 16-11-2000 | AU | 4141600 A | 21-11-2000 |
| | | IL | 129831 A | 01-06-2004 |
| | | WO | 0069160 A1 | 16-11-2000 |
| DE 202012004412 U1 | 14-06-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0038877 A1